# EUROPÄISCHE PATENTANMELDUNG

(11) **EP 1 336 364 A2**
(43) Veröffentlichungstag der Anmeldung: **20.08.2003**
(21) Anmeldenummer: 02005466.4
(22) Anmeldetag: 09.03.2002
(51) Int. Cl.: A47J 19/02

(54) **Vorrichtung zum Pressen von Saft**

(30) Priorität: 14.02.2002 DE 20202180 U
(71) Anmelder: Fratelli Averna S.p.A., 93100 Caltanissetta (IT)
(72) Erfinder: Junge, Frank, 20249 Hamburg (DE); Winter, Corinna, 22301 Hamburg (DE)
(74) Vertreter: Klickow, Hans-Henning

(57) **Zusammenfassung**

Die Vorrichtung dient zum Pressen von Saft und weist einen Auffangraum auf, der von einem Boden (1), einer Außenwandung (2) sowie einer Mittelkonsole (3) begrenzt ist. Die Mittelkonsole verjüngt sich im bereich einer Konsolenkuppe (9) in eine dem Boden abgewandte Richtung. Die Mittelkonsole ist mit einer Preßverrippung (10) versehen und als ein Hohlkörper mit einem Innenraum ausgebildet. Die Mittelkonsole ist in einem der Verjüngung abgewandten Bereich mit dem Boden verbunden und weist eine Zugangsöffnung auf. Der Innenraum der Mittelkonsole ist ausgehend vom Boden in Richtung auf die Konsolenkuppe im wesentlichen zylinderartig begrenzt.

## Beschreibung

Die Erfindung betrifft eine Vorrichtung zum Pressen von Saft, die einen Auffangraum aufweist, der von einem Boden, einer Außenwand sowie einer Mittelkonsole begrenzt ist und bei der sich die Mittelkonsole im Bereich einer Konsolenkuppe in eine dem Boden abgewandte Richtung verjüngt sowie bei der die Mittelkonsole mit einer Preßverrippung versehen und als ein Hohlkörper mit einem Innenraum ausgebildet ist, der in einem der Verjüngung abgewandten Bereich mit dem Boden verbunden ist sowie eine Zugangsöffnung aufweist.

Derartige Vorrichtungen werden typischerweise einteilig aus Kunststoff hergestellt und dienen zum Pressen von Zitronensaft bzw. zum Pressen von anderen Südfrüchten. Typischerweise werden diese Vorrichtungen als separate Haushaltsgegenstände hergestellt und verkauft. Aufgrund ihrer Konturgebung sind die Vorrichtungen nicht dafür vorgesehen und geeignet, in Kombination mit anderen Waren als kompaktes Gesamtelement verkauft zu werden.

Aufgabe der vorliegenden Erfindung ist es, eine Vorrichtung der einleitend genannten Art derart zu konstruieren, daß eine Kombinierbarkeit mit anderen Produkten unterstützt wird.

Diese Aufgabe wird erfindungsgemäß dadurch gelöst, daß der Innenraum der Mittelkonsole ausgehend vom Boden in Richtung auf die Konsolenkuppe im wesentlichen zylinderartig begrenzt ist.

Typische Vorrichtungen, die beispielsweise zum Pressen von Zitronensaft geeignet sind, weisen im Bereich der Mittelkonsole eine pyramidenartige oder kuppelartige Gestaltung auf. Hierdurch können diese Vorrichtungen nicht mit einer hohen Eigenstabilität auf andere Produkte aufgestellt werden. Durch die zylinderartige Gestaltung des Innenraumes der Mittelkonsole zwischen dem Boden des Auffangraumes und der Konsolenkuppe ist es möglich, die Vorrichtung auf andere Produkte, die schlanke und langgestreckte Halterungsvorsprünge aufweisen, aufzustecken. Insbesondere ist es hierdurch möglich, die Vorrichtung auf den Hals einer Flasche aufzustecken und durch eine geeignete Anpassung einer Außenkontur der Vorrichtung an eine Außenkontur der Flasche ein sehr harmonisches und ästhetisches äußeres Erscheinungsbild bereitzustellen.

Eine einfache Entformbarkeit wird dadurch unterstützt, daß sich die Mittelkonsole ausgehend von der Zugangsöffnung in Richtung auf die Konsolenkuppe verjüngt.

Eine mechanisch stabile Kombinierbarkeit mit einer Flasche wird dadurch unterstützt, daß die Mittelkonsole eine Ausdehnung in Richtung einer Konsolenlängsachse aufweist, die mindestens einem Durchmesser der Mittelkonsole entspricht.

Ebenfalls erweist es sich für eine Kombination mit anderen Produkten als zweckmäßig, daß der Auffangraum in Richtung der Konsolenlängsachse eine Ausdehnung aufweist, die mindestens einem Durchmesser des Auffangraumes entspricht.

Zu einer weiteren Verbesserung der Stapelbarkeit bei einer Kombination mit anderen Produkten trägt es bei, daß der Boden mindestens bereichsweise schräg zu einer von der Zugangsöffnung aufgespannten Fläche verläuft.

Ein optisch ansprechendes Erscheinungsbild wird dadurch unterstützt, daß die Außenwandung und die Mittelkonsole aus einem transparenten Kunststoff ausgebildet sind.

Zur Verhinderung eines Hineinfallens von Verschmutzungen in den Auffangraum wird vorgeschlagen, daß der Auffangraum von einer Abdeckkappe verschließbar ist.

Eine weitere Verbesserung der Gebrauchseigenschaften kann dadurch erfolgen, daß die Außenwandung im Bereich ihrer dem Boden abgewandten Ausdehnung einen Abschlußring trägt.

Zur Unterstützung eines festen Sitzes bei einem Aufschieben der Vorrichtung auf den Hals einer Flasche wird vorgeschlagen, daß der Boden eine Gestaltung aufweist, die an die Kontur einer Flaschenschulter angepaßt ist.

Eine stabile Halterung im Bereich eines Flaschenhalses wird auch dadurch erleichtert, daß der Innenraum der Mittelkonsole eine Gestaltung aufweist, die an die Kontur eines Flaschenhalses angepaßt ist.

In den Zeichnungen sind Ausführungsbeispiele der Erfindung schematisch dargestellt. Es zeigen:
- Fig. 1: Eine Seitenansicht der Vorrichtung mit gestrichelt eingezeichneten Innenkonturen,
- Fig. 2: eine perspektivische Darstellung der Vorrichtung schräg von unten,
- Fig. 3: eine Darstellung gemäß Blickrichtung III in Fig. 1,
- Fig. 4: eine Seitenansicht einer auf einen Flaschenhals aufgesteckten transparenten Vorrichtung,
- Fig. 5: eine perspektivische Darstellung der Vorrichtung gemäß Fig. 4 schräg von oben und
- Fig. 6: eine perspektivische Darstellung einer Abdeckkappe der Vorrichtung.

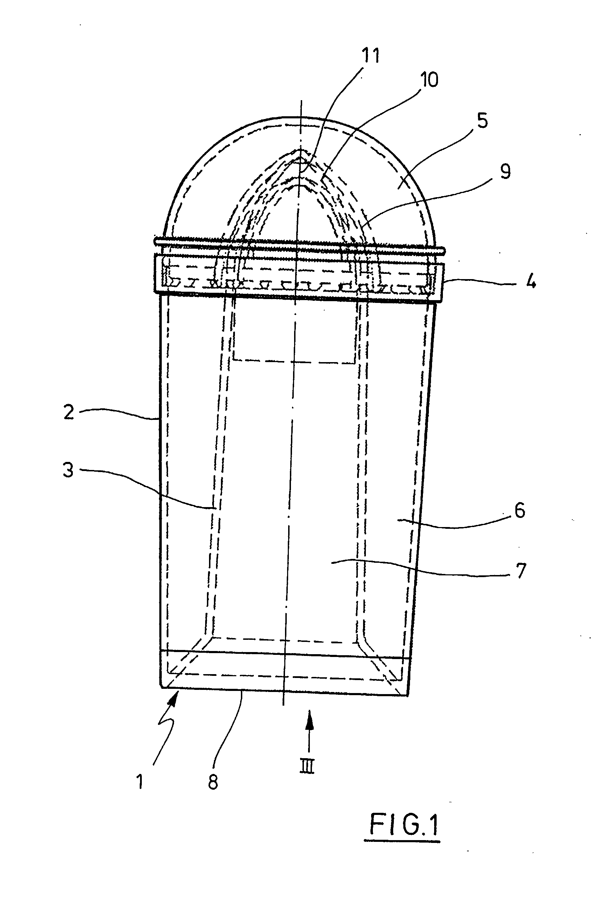

Gemäß der Ausführungsform in Fig. 1 weist die Vorrichtung einen Boden (1), eine Außenwandung (2) sowie eine Mittelkonsole (3) auf. Der Boden (1) ist im wesentlichen kreisförmig begrenzt und die Außenwandung (2) erhebt sich zylinderartig über den Boden (1). Im Bereich ihrer dem Boden (1) abgewandten Ausdehnung ist die Außenwandung (2) von einem Abschlußring (4) begrenzt, auf den eine Abdeckkappe (5) aufgesteckt werden kann, die einen Auffangraum (6) der Vorrichtung im Bereich dessen dem Boden (1) abgewandte Ausdehnung abnehmbar verschließt.

Die Mittelkonsole (3) begrenzt einen Innenraum (7) und ist im Bereich des Bodens (1) mit einer Zugangsöffnung (8) versehen. Im Bereich ihrer der Zugangsöffnung (8) abgewandten Ausdehnung weist die Mittelkonsole (3) eine Konsolenkuppe (9) auf, die sich in eine der Zugangsöffnung (8) abgewandte Richtung verjüngt. Außenseitig ist die Konsolenkuppe (9) mit einer Preßverrippung (10) versehen, um bei einem Entsaften von Früchten das Fruchtfleisch zu quetschen und hierdurch einen Saftaustritt zu unterstützen.

Der Boden (1) verläuft ausgehend von der Außenwandung (2) mit einer Steigung in Richtung auf die Konsolenkuppe (9). Insbesondere ist daran gedacht, die Steigung des Bodens (1) relativ zu einer von der Zugangsöffnung (8) aufgespannten Fläche mit einem Winkel von etwa 45° verlaufen zu lassen.

Fig. 1 veranschaulicht, daß sich der Innenraum (7) abweichend von einer idealen Zylinderform entlang einer Konsolenlängsachse (11) in Richtung auf die Konsolenkuppe (9) leicht verjüngt. Hierdurch wird insbesondere eine leichte Entformbarkeit bei einer Herstellung der Vorrichtung aus Kunststoff unterstützt.

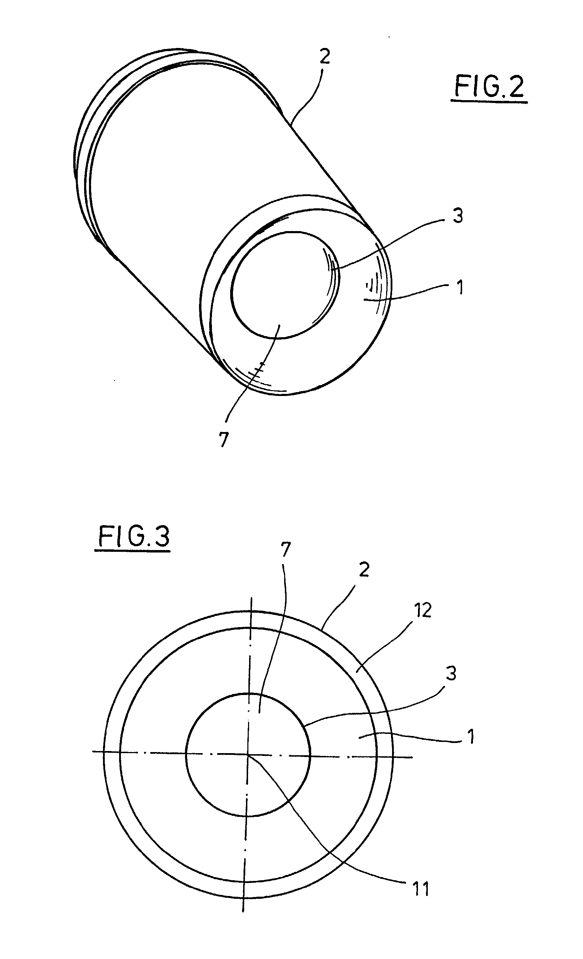

Fig. 2 veranschaulicht in einer perspektivischen Darstellung insbesondere die Konstruktion im Bereich des Bodens (1) sowie der Zugangsöffnung (8). Es ist hier insbesondere auch noch einmal die für eine Entsaftung von Zitrusfrüchten vorteilhafte runde Gestaltung der Grundfläche zu erkennen.

Eine im wesentlichen symmetrische Konstruktion der Vorrichtung relativ zur Konsolenlängsachse (11) ist auch aus der Ansicht in Fig. 3 zu erkennen, die einen Blick in den Innenraum (7) hinein erlaubt. Zu erkennen ist insbesondere ein radialer Standring (12), der als Abflachung des Bodens (1) realisiert ist.

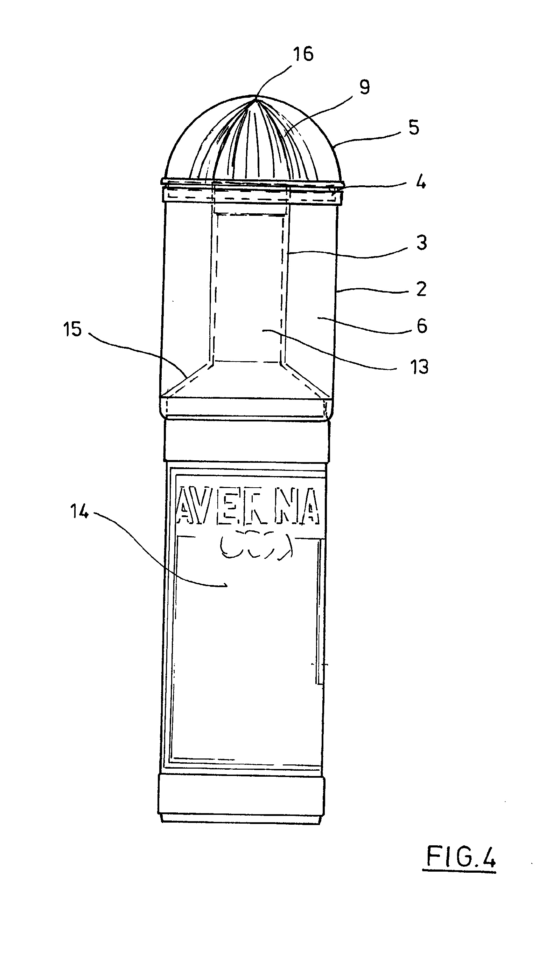

Fig. 4 zeigt die Vorrichtung gemäß Fig. 1 nach einem Aufschieben auf einen Flaschenhals (13) einer Flasche (14). Der Flaschenhals (13) ist hierbei vom Innenraum (7) der Mittelkonsole (3) aufgenommen. Der Boden (1) steht auf einer Schulter (15) der Flasche (14). Durch den geneigten Verlauf des Bodens (1) wird ein stabiles Aufsitzen auf der Schulter (15) der Flasche (14) erreicht.

Ein Außendurchmesser der Vorrichtung ist etwa an einen Außendurchmesser der Flasche (14) angepaßt. Hierdurch wird ein harmonisches äußeres Erscheinungsbild unterstützt. Insbesondere ist daran gedacht, die Außenwandung (2) und die Mittelkonsole (3) sowie die Abdeckkappe (5) aus einem transparenten Kunststoff auszubilden. Hierdurch wird auch nach einem Aufsetzen der Vorrichtung auf die Flasche (14) ein Blick auf den oberen Flaschenbereich ermöglicht.

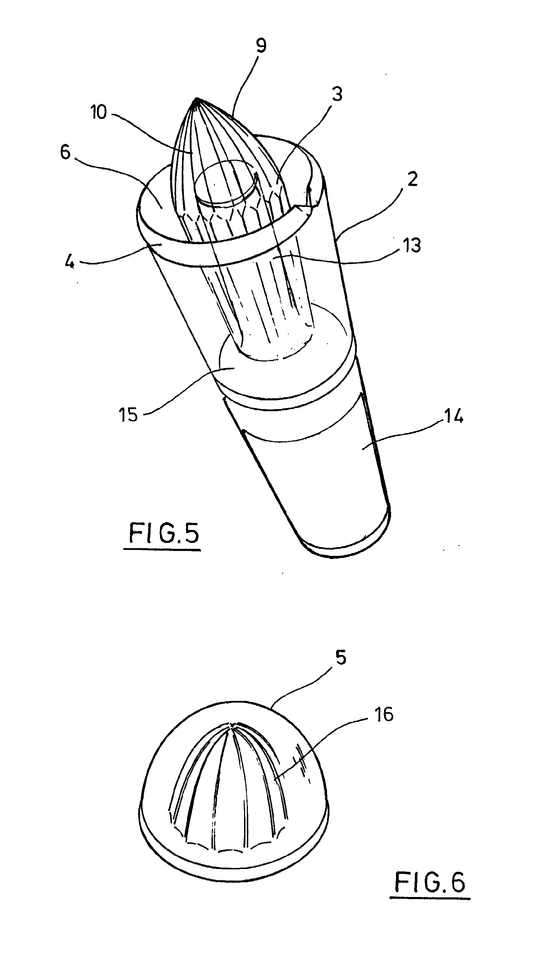

Fig. 5 veranschaulicht die Vorrichtung gemäß Fig. 4 bei einer perspektivischen Darstellung schräg von oben und mit abgenommener Abdeckkappe (5). Auch diese Darstellung veranschaulicht die harmonische äußere Gestaltung der Gesamtvorrichtung nach einer Kombination mit der Flasche (14).

Fig. 6 veranschaulicht die Gestaltung der Abdeckkappe (5). Es ist zu erkennen, daß die Abdeckkappe (5) eine zentral angeordnete Kappenkonsole (16) aufweist, die derart konturiert ist, daß ein Innenraum der Kappenkonsole (16) die Konsolenkuppe (9) nach einem Aufsetzen der Abdeckkappe (5) auf die Außenwandung (2) aufnimmt.

## Patentansprüche

1. Vorrichtung zum Pressen von Saft, die einen Auffangraum aufweist, der von einem Boden, einer Außenwandung sowie einer Mittelkonsole begrenzt ist und bei der sich die Mittelkonsole im Bereich einer Konsolenkuppe in eine dem Boden abgewandte Richtung verjüngt sowie bei der die Mittelkonsole mit einer Preßverrippung versehen und als ein Hohlkörper mit einem Innenraum ausgebildet ist, der in einem der Verjüngung abgewandten Bereich mit dem Boden verbunden ist sowie eine Zugangsöffnung aufweist, **dadurch gekennzeichnet, daß** der Innenraum (7) der Mittelkonsole (3) ausgehend vom Boden (1) in Richtung auf die Konsolenkuppe (9) im wesentlichen zylinderartig begrenzt ist.

2. Vorrichtung nach Anspruch 1, **dadurch gekennzeichnet, daß** sich die Mittelkonsole (3) ausgehend von der Zugangsöffnung (8) in Richtung auf die Konsolenkuppe (9) verjüngt.

3. Vorrichtung nach Anspruch 1 oder 2, **dadurch gekennzeichnet, daß** die Mittelkonsole (3) eine Ausdehnung in Richtung einer Konsolenlängsachse (11) aufweist, die mindestens einem Durchmesser der Mittelkonsole (3) entspricht.

4. Vorrichtung nach einem der Ansprüche 1 bis 3, **dadurch gekennzeichnet, daß** der Auffangraum (6) in Richtung der Konsolenlängsachse (11) eine Ausdehnung aufweist, die mindestens einem Durchmesser des Auffangraumes (6) entspricht.

5. Vorrichtung nach einem der Ansprüche 1 bis 4, **dadurch gekennzeichnet, daß** der Boden (1) mindestens bereichsweise schräg zu einer von der Zugangsöffnung (8) aufgespannten Fläche verläuft.

6. Vorrichtung nach einem der Ansprüche 1 bis 5, **dadurch gekennzeichnet, daß** die Außenwandung (2) und die Mittelkonsole (3) aus einem transparenten Kunststoff ausgebildet sind.

7. Vorrichtung nach einem der Ansprüche 1 bis 6, **dadurch gekennzeichnet, daß** der Auffangraum (6) von einer Abdeckkappe (5) verschließbar ist.

8. Vorrichtung nach einem der Ansprüche 1 bis 7, **dadurch gekennzeichnet, daß** die Außenwandung (2) im Bereich ihrer dem Boden (1) abgewandten Ausdehnung einen Abschlußring (4) trägt.

9. Vorrichtung nach einem der Ansprüche 1 bis 8, **dadurch gekennzeichnet, daß** der Boden (1) eine Gestaltung aufweist, die an die Kontur einer Flaschenschulter (15) angepaßt ist.

10. Vorrichtung nach einem der Ansprüche 1 bis 9, **dadurch gekennzeichnet, daß** der Innenraum (7) der Mittelkonsole (3) eine Gestaltung aufweist, die an die Kontur eines Flaschenhalses (13) angepaßt ist.
